# EUROPEAN PATENT APPLICATION

(11) **EP 2 450 998 A1**
(43) Date of publication of application: **09.05.2012**
(21) Application number: 10794154.4
(22) Date of filing: 29.06.2010
(51) Int. Cl.: H01M 10/0569, H01M 10/052, H01M 10/0567, H01M 10/0568, H01G 9/038

(54) **ELECTROLYTIC SOLUTION FOR CHARGEABLE DEVICE, ELECTROLYTIC SOLUTION FOR LITHIUM ION SECONDARY BATTERY, AND SECONDARY BATTERY**

(30) Priority: 30.06.2009 JP 2009155562
(71) Applicant: Asahi Glass Company, Limited, Tokyo 100-8405 (JP)
(72) Inventor: IWAYA, Masao, Tokyo 100-8405 (JP)
(74) Representative: Müller-Boré & Partner Patentanwälte
(86) International application number: PCT/JP2010/061073
(87) International publication number: WO 2011/001985

(57) **Abstract**

It is an object to provide, as a nonaqueous electrolyte solution using a solvent comprising a specific compound such as a polyethylene glycol dialkyl ether, an electrolyte solution for a chargeable device and an electrolyte solution for a lithium ion secondary battery exhibiting excellent cycle characteristics, and a secondary battery using the electrolyte solution.

An electrolyte solution for a chargeable device, which comprises a fluorinated lithium salt and a solvent comprising a specific compound such as a polyethylene glycol dialkyl ether, and as an optional component, a hydroxy group-containing organic compound, wherein the amount of the hydroxy group-containing organic compound is at most 100 mg per 1 kg of the specific compound. Particularly, an electrolyte solution for a lithium secondary battery. Further, a lithium secondary battery using the electrolyte solution for a lithium secondary battery.

## Description

### TECHNICAL FIELD

The present invention relates to an electrolyte solution for a chargeable device, an electrolyte solution for a lithium ion secondary battery, and a secondary battery.

### BACKGROUND ART

In a secondary battery such as a lithium secondary battery or a lithium ion secondary battery, a flammable organic solvent is used as a nonaqueous electrolyte solution, and thus there is possibility of ignition, breakage or the like at the time of runaway of a cell. Accordingly, it has been attempted to make a nonaqueous electrolyte solution nonflammable by use of a lithium salt having a chain structure such as LiPF₆ or Li[N(SO₂C₂F₅)₂] and a specific hydrofluoroether as a solvent for the nonaqueous electrolyte solution.

As such a hydrofluoroether, a monoether of an alkyl group and a fluoroalkyl group (a fluoroalkyl group is a group having at least one hydrogen atom in an alkyl group substituted by a fluorine atom), or a specific polyfluoroether having a linear structure and having at least two etheric oxygen atoms, is known.

A nonaqueous electrolyte solution containing such a hydrofluoroether, in its initial composition, is not ignited even when contacted with an ignition source. The reason is such that a low boiling point hydrofluoroether having no flash point is filled in the vapor phase to provide so-called choking effect. However, with a conventional nonaqueous electrolyte solution containing a hydrofluoroether, if an excessive load is exerted to the cell, and a high temperature condition is prolonged, such a hydrofluoroether volatilizes to lose the choking effect, whereby it has been sometimes difficult to warrant nonflammability.

Therefore, the following nonaqueous electrolyte solutions have been proposed as nonaqueous electrolyte solutions to warrant nonflammability more securely.
(1) A nonaqueous electrolyte solution for a lithium secondary battery comprising LiPF₆ and an organic fluorinated ether compound represented by R²³-O-R²⁴ (wherein R²³ and R²⁴ are fluorinated alkyl groups) (Patent Document 1).
(2) A nonaqueous electrolyte solution comprising LiBF₄ and as a solvent, tetraglyme (Patent Document 2).

Further, the following has been reported with respect to the properties of the glyme type solvent.
(3) Lithium salts such as FSO₂N(Li)SO₂F form a strong interaction with etheric oxygen atoms of the glyme type solvent to form a stable 1:1 complex, and from the results of e.g. the thermal analysis, such a complex exhibits a behavior as if it were a single ion species and was not ignitiable at all by heating by a burner (Non-Patent Documents 1 and 2).

### PRIOR ART DOCUMENTS

### PATENT DOCUMENTS

Patent Document 1: JP-A-2004-87136
Patent Document 2: JP-A-2001-273926

### NON-PATENT DOCUMENTS

Non-Patent Document 1: Summaries of Presentations at 47th Symposium on Batteries in 2006 1 F06
Non-Patent Document 2: Summaries of Presentations at 75th Electrochemical Society of Japan in 2008 3D09

### DISCLOSURE OF INVENTION

### TECHNICAL PROBLEM

However, a secondary battery employing a glyme type solvent for the nonaqueous electrolyte solution was insufficient in cycle characteristics. Accordingly, a secondary battery showing more excellent cycle characteristics has been desired as a secondary battery containing a glyme type solvent.

It is an object of the present invention to provide an electrolyte solution for a chargeable device and an electrolyte solution for a lithium ion secondary battery showing excellent cycle characteristics, and a secondary battery using such an electrolyte solution for a lithium ion secondary battery.

### SOLUTION TO PROBLEM

To achieve the above object, the present invention provides the following.
[1] An electrolyte solution for a chargeable device, which comprises a fluorinated lithium salt and a solvent comprising a compound represented by the following formula (1) and as an optional component, a hydroxy group-containing organic compound, wherein the amount of the hydroxy group-containing organic compound is at most 100 mg per 1 kg of the compound represented by the formula (1): 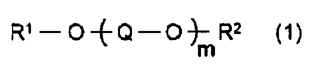 wherein m is an integer of from 1 to 10, Q is a 6₁₋₄ linear alkylene group, or a group having at least one hydrogen atom of such a linear alkylene group substituted by a C₁₋₅ alkyl group or by a C₁₋₅ alkyl group having an etheric oxygen atom between carbon atoms, and when m is at least 2, the plurality of Q's may be the same group or different groups, and each of R¹ and R² is independently a C₁-₁₀ alkyl group.
[2] The electrolyte solution for a chargeable device according to the above [1], wherein the fluorinated lithium salt is at least one member selected from the group consisting of LiPF₆, LIBF₄ and FSO₂N(Li)SO₂F.
[3] The electrolyte solution for a chargeable device according to the above [1] or [2], wherein the solvent comprising a compound represented by the formula (1) is a solvent comprising a compound represented by the following formula (1-A): 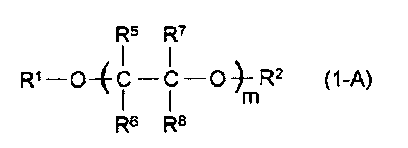 wherein m is an integer of from 1 to 10, each of R⁵ to R⁸ is independently a hydrogen atom, a C₁₋₅ alkyl group or a C₁₋₅ alkyl group having an etheric oxygen atom between carbon atoms, and when m is at least 2, the m number of R⁵ to R⁸ may be respectively the same group or different groups, and each of R¹ and R² is independently a C₁₋₁₀ alkyl group.
[4] The electrolyte solution for a chargeable device according to the above [1] or [2], wherein the solvent comprising a compound represented by the formula (1) is at least one member selected from the group consisting of diethylene glycol dimethyl ether, triethylene glycol dimethyl ether, tetraethylene glycol dimethyl ether, pentaethylene glycol dimethyl ether, diethylene glycol diethyl ether, triethylene glycol diethyl ether, tetraethylene glycol diethyl ether and pentaethylene glycol diethyl ether.
[5] The electrolyte solution for a chargeable device according to any one of the above [1] to [4], wherein the hydroxy group-containing organic compound is a compound represented by the following formula (2): 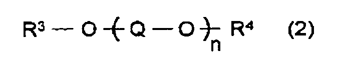 wherein n is an integer of from 1 to 10, Q is a C₁₋₄ linear alkylene group, or a group having at least one hydrogen atom of such a linear alkylene group substituted by a C₁₋₅ alkyl group or by a C₁₋₅ alkyl group having an etheric oxygen atom between carbon atoms, and when n is at least 2, the plurality of Q's may be the same group or different groups, and both R³ and R⁴ are hydrogen atoms, or either one of them is a hydrogen atom and the other is a C₁₋₁₀ alkyl group.
[6] The electrolyte solution for a chargeable device according to any one of the above [1] to [4], wherein the hydroxy group-containing organic compound is a compound represented by the following formula (2-A): 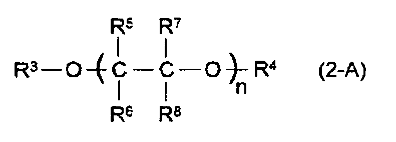 wherein n is an integer of from 1 to 10, each of R⁵to R⁸ is independently a hydrogen atom, a C₁₋₅ alkyl group or a C₁₋₅ alkyl group having an etheric oxygen atom between carbon atoms, and when n is at least 2, the n number of R⁵ to R⁸ may be respectively the same group or different groups, and both R³ and R⁴ are hydrogen atoms, or either one of them is a hydrogen atom and the other is a C₁₋₁₀ alkyl group.
[7] The electrolyte solution for a chargeable device according to any one of the above [1] to [6], which further contains a nonflammable solvent.
[8] The electrolyte solution for a chargeable device according to the above [7], wherein the nonflammable solvent is a hydrofluoroether.
[9] The electrolyte solution for a chargeable device according to the above [8], wherein the hydrofluoroether is at least one compound selected from the group consisting of CF₃ CH₂ OCF₂ CF₂ H, CHF₂ CF₂ CH₂ OCF₂ CF₂ H and CF₃ CH₂ OCF₂ CHFCF₃ .
[10] The electrolyte solution for a chargeable device according to any one of the above [1] to [9], wherein the content of the compound represented by the formula (1) is from 0.2 to 4.0 times by mol to the total amount of the fluorinated lithium salt.
[11] An electrolyte solution for a lithium ion secondary battery, comprising the electrolyte solution for a chargeable device as defined in any one of the above [1] to [10].
[12] A secondary battery comprising a negative electrode made of a material capable of electrochemically charging or discharging lithium ions, or metal lithium or a lithium alloy, a positive electrode made of a material capable of electrochemically charging or discharging lithium ions, and the electrolyte solution for a lithium ion secondary battery as defined in the above [11].
[13] The secondary battery according to the above [12], which is used at a charging voltage being at least 3.4 V (as a potential based on lithium metal).

### ADVANTAGEOUS EFFECTS OF INVENTION

By using the electrolyte solution for a chargeable device of the present invention as an electrolyte solution for a lithium ion secondary battery, the obtainable secondary battery shows excellent cycle characteristics.

### DESCRIPTION OF EMBODIMENTS

In this specification, a compound represented by the formula (1) will be referred to as a compound (1). The same applies to other compounds.

### [Electrolyte solution for chargeable device]

The electrolyte solution for a chargeable device of the present invention (hereinafter referred to as "the present electrolyte solution") is an electrolyte solution comprising a fluorinated lithium salt and a compound (1). The present electrolyte solution is preferably a nonaqueous electrolyte solution containing substantially no water. In the present invention, the nonaqueous electrolyte solution is an electrolyte solution using a solvent which contains substantially no water, and an electrolyte solution wherein, even when it contains water, the water content is an amount within a range where no deterioration is observed in the performance of a secondary battery using such a nonaqueous electrolyte solution. The content of water which may be contained in such a nonaqueous electrolyte solution is preferably at most 500 ppm by mass, more preferably at most 100 ppm by mass, further preferably at most 50 ppm by mass, based on the total mass of the electrolyte solution. The lower limit of the water content is 0 ppm.

The chargeable device using the present electrolyte solution may, for example, be a lithium ion secondary battery, an electric double layer capacitor or a lithium ion capacitor, and is preferably a lithium ion secondary battery.

### (Fluorinated lithium salt)

The fluorinated lithium salt in the present invention is an electrolyte which dissociates in the nonaqueous electrolyte solution to supply lithium ions and has a fluorine atom in its structure.

Such a fluorinated lithium salt may, for example, be at least one member selected from the group consisting of LiPF₆, LiBF₄ and FSO₂N(Li)SO₂F. LiPF₆, LiBF₄ and FSO₂N(Li)SO₂F are compounds known as lithium salts for a lithium ion secondary battery.

The fluorinated lithium salt is preferably LiPF₆. Further, as the fluorinated lithium salt, LiPF₆ and FSO₂N(Li)SO₂F may be used in combination, LiBF₄ may be used alone, or FSO₂N(Li)SO₂F may be used in combination.

The content of the fluorinated lithium salt in the present electrolyte solution is preferably from 0.1 to 3.0 mol, particularly preferably from 0.5 to 2.0 mol per 1 L of the present electrolyte solution. When the content of the fluorinated lithium salt is at least 0.1 mol per 1 L of the present electrolyte solution, the present electrolyte solution having a high conductivity tends to be easily obtainable. Further, when the content of the fluorinated lithium salt is at most 3.0 mol per 1 L of the present electrolyte solution, the fluorinated lithium salt can easily be dissolved in the compound (1) and the after-mentioned hydrofluoroether used as the case requires in the present electrolyte solution.

As the fluorinated lithium salt, a fluorinated lithium salt selected from the group consisting of LiPF₆, LiBF₄ and FSO₂N(Li)SO₂F (hereinafter referred to as "LiPF₆ and the like") may be used alone, or another fluorinated lithium salt may further be used in addition to the above fluorinated lithium salt. Such another fluorinated lithium salt may, for example, be CF₃SO₂N(Li)SO₂CF₃ or CF₃CF₂SO₂N(Li)SO₂CF₂CF₃. Further, to the present electrolyte solution, a lithium salt containing no fluorine atom may be added. Such a lithium salt may, for example, be LiClO₄.

In a case where a fluorinated lithium salt selected from LiPF₆ and the like and another fluorinated lithium salt are used in combination, the molar ratio (Mb/Ma) of the molar amount (Mb) of another fluorinated lithium salt to the molar amount (Ma) of the fluorinated lithium salt selected from LiPF₆ and the like is preferably from 0.01 to 10, more preferably from 0.05 to 2.0.

When the above molar ratio (Mb/Ma) is at least 0.01, the conductivity of the present electrolyte solution which is nonflammable can easily be maintained to be high. Further, when the above molar ratio (Mb/Ma) is at most 10, the present electrolyte solution having a high chemical stability can easily be obtainable.

Further, in a case where LiPF₆ and FSO₂N(Li)SO₂F are used in combination, the molar ratio (Md/Mc) of the molar amount (Md) of FSO₂N(Li)SO₂F to the molar amount (Mc) of LiPF₆ is preferably from 0.01 to 10, more preferably from 0.05 to 2.0.

When the above molar ratio (Md/Mc) is at least 0.01, the conductivity of the present electrolyte solution which is nonflammable can easily be maintained to be high. Further, when the molar ratio (Md/Mc) is at most 10, the present electrolyte solution having a high chemical stability can easily be obtainable.

### (Compound (1))

The compound (1) is a compound represented by the following formula (1). It is considered that by the fluorinated lithium salt and the compound (1) forming a complex, the fluorinated lithium salt is uniformly dissolved in the present electrolyte solution resultingly_{.} 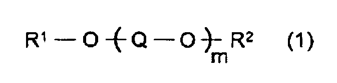 wherein m is an integer of from 1 to 10, Q is a C₁₋₄ linear alkylene group, or a group having at least one hydrogen atom in such a linear alkylene group substituted by a C₁₋₅ alkyl group or by a C₁₋₅ alkyl group having an etheric oxygen atom between carbon atoms, and when m is at least 2, the plurality of Q's may be the same group or different groups, and each of R¹ and R² is independently a C₁₋₁₀ alkyl group.

The linear alkylene group is preferably a dimethylene group, a trimethylene group or a tetramethylene group, particularly preferably a dimethylene group. The alkyl group which substitutes for the hydrogen atom in the linear alkylene group is preferably an alkyl group having one or two carbon atoms, particularly preferably a methyl group. The alkyl group having an etheric oxygen atom between carbon atoms which substitutes for the hydrogen atom in the linear alkylene group is preferably an alkyl group having one or two carbon atoms which has an alkoxy group having one or two carbon atoms, for example, a 2-methoxyethyl group.

m is preferably from 1 to 6, particularly preferably from 2 to 5.

Each of R¹ and R² may be independently a linear alkyl group or a branched alkyl group. Each of R¹ and R² is independently preferably a C₁₋₄ alkyl group, particularly preferably an alkyl group having one or two carbon atoms. Further, R¹ and R² may be different alkyl groups but are preferably the same alkyl group.

The compound (1) is preferably a compound represented by the following formula (1-A). The compound (1-A) in the present invention is an ethylene glycol derivative, for example, a dialkyl ether of ethylene glycol or polyethylene glycol, or such a dialkyl ether having at least one hydrogen atom in the ethylene glycol unit (i.e. oxyethylene unit) substituted by an alkyl group or an alkyl group having an etheric oxygen atom between carbon atoms. 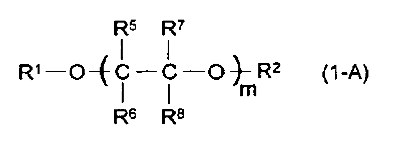 wherein m is an integer of from 1 to 10, each of R⁵ and R³ is independently a hydrogen atom, a C₁₋₅ alkyl group or a C₁₋₅ alkyl group having an etheric oxygen atom between carbon atoms, and when m is at least 2, the m number of R⁵ and R⁸ may be respectively the same group or different groups, and each of R¹ and R² is independently a C₁₋₁₀ alkyl group.

In a case where m is at least 2, m number of R⁵ and R⁸ are respectively present in one molecule of the compound (1-A). For example, the m number of R⁵'s are present in one molecule of the compound (1-A). The m number of R⁵'s may be respectively the same group or different groups, or some of them may be the same group and the other may be different groups. The same as R⁵ applies to R⁶ to R⁸.

R⁵ to R⁸ except for the hydrogen atom are groups disclosed as the groups which substitute for the hydrogen atom in the linear alkylene group as Q in the compound (1), and preferred groups thereof are also as defined for the compound (1). In a case where at least one of R⁵ and R⁸ is a group other than the hydrogen atom, the number of groups other than the hydrogen atom is preferably one or two, and in the case of two, the two groups are preferably bonded to different carbon atoms.

As the compound (1-A), preferred is a compound represented by the following formula (1-A) wherein R⁵ to R⁸ are all hydrogen atoms. 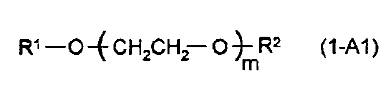 wherein m is an integer of from 1 to 10, and each of R¹ and R² is independently a C₁₋₁₀ alkyl group.

In the compound (1-A), m is preferably from 1 to 6, and each of the alkyl groups as R¹ and R² is independently preferably a methyl group or an ethyl group.

The compound (1-A1) wherein R¹ and R² are methyl groups and m is from 1 to 6 may, for example, be 1,2-dimethoxyethane (m=1, monoglyme), diethylene glycol dimethyl ether (m=2, diglyme), triethylene glycol dimethyl ether (m=3, triglyme), tetraethylene glycol dimethyl ether (m=4, tetraglyme), pentaethylene glycol dimethyl ether (m=5, pentaglyme) or hexaethylene glycol dimethyl ether (m=6, hexaglyme).

Further, the compound (1-A1) wherein R¹ and R² are ethyl groups and m is from 1 to 6 may, for example, be 1,2-diethoxyethane, diethylene glycol diethyl ether, triethylene glycol diethyl ether, tetraethylene glycol diethyl ether, pentaethylene glycol diethyl ether or hexaethylene glycol diethyl ether.

Among them, 1,2-diemthoxyethane, diethylene glycol dimethyl ether, triethylene glycol dimethyl ether, tetraethylene glycol dimethyl ether, pentaethylene glycol dimethyl ether or hexaethylene glycol dimethyl ether, wherein R¹ and R² are methyl groups, are more preferred.

As the compound (1-A1), preferred from the viewpoint of the viscosity is diethylene glycol dimethyl ether, triethylene glycol dimethyl ether, tetraethylene glycol dimethyl ether, pentaethylene glycol dimethyl ether, diethylene glycol diethyl ether, triethylene glycol diethyl ether, tetraethylene glycol diethyl ether or pentaethylene glycol diethyl ether, wherein m is from 2 to 5. Such compounds (1-A1) have a viscosity (20°C) of at most 5 cP, provide excellent practical solvent viscosity of the present electrolyte solution, and in addition, the obtainable present electrolyte solution has favorable conductivity. Further, in view of excellent balance of both the properties of the viscosity and the flash point, particularly preferred is diethylene glycol dimethyl ether (flash point: 50°C), triethylene glycol dimethyl ether (flash point: 110°C) or tetraethylene glycol dimethyl ether (flash point: 144°C).

The compound (1) preferably essentially comprises a compound of the above formula (1-A1) wherein m is from 2 to 5, more preferably consists solely of compounds of the above formula (1-A1) wherein m is from 2 to 5, further preferably consists solely of one member selected from the group consisting of compounds of the above formula (1-A1) wherein m is from 2 to 5, particularly preferably consists solely of diethylene glycol dimethyl ether, triethylene glycol dimethyl ether or tetraethylene glycol dimethyl ether.

Further, among the compounds (1), as the compound (1-A1) other than the above compounds, for example, diethylene glycol di-n-propyl ether, diethylene glycol di-iso-propyl ether, diethylene glycol di-n-butyl ether, triethylene glycol di-n-propyl ether, triethylene glycol di-iso-propyl ether, triethylene glycol di-n-butyl ether, tetraethylene glycol di-n-propyl ether, tetraethylene glycol di-iso-propyl ether, tetraethylene glycol din-butyl ether, pentaethylene glycol di-n-propyl ether, pentaethylene glycol di-iso-propyl ether, pentaethylene glycol di-n-butyl ether, hexaethylene glycol di-n-propyl ether, hexaethylene glycol di-iso-propyl ether or hexaethylene glycol di-n-butyl ether may be mentioned.

Further, as the compound (1), for example, compounds represented by the following formulae may also be mentioned (wherein Et represents an ethyl group). The compounds represented by the following formulae are dialkyl ether derivatives containing oxytrimethylene group units, which may contain an oxyethylene unit.

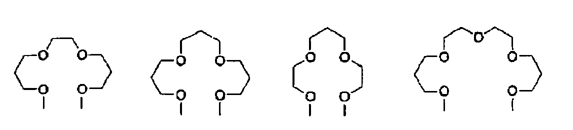

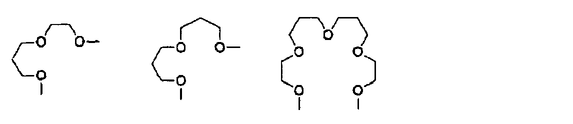

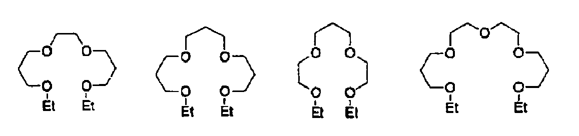

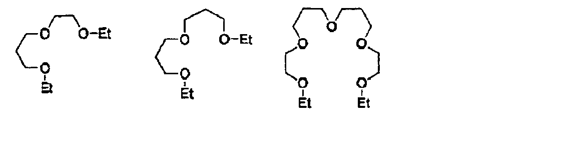

The content of the compound (1) in the present electrolyte solution is preferably from 0.2 to 4.0 times by mol, more preferably from 0.5 to 3.0 times by mol, particularly preferably from 0.5 to 2.0 times by mol, to the total amount of the fluorinated lithium salt in the present electrolyte solution.

When the content of the compound (1) is at least 0.2 time by mol to the fluorinated lithium salt, the fluorinated lithium salt is easily dissolved uniformly in the present electrolyte solution. Further, when the contend of the compound (1) is at most 4.0 times by mol to the fluorinated lithium salt, the present electro!yte solution excellent in nonflammability is easily obtained.

The present electrolyte solution is an electrolyte solution comprising the above-described fluorinated lithium salt and compound (1) as essential components. The present electrolyte solution is preferably a nonaqueous electrolyte solution containing substantially no water.

The present inventors have studied factors of the decrease in the cycle characteristics of the nonaqueous electrolyte solution used for a lithium ion secondary battery or the like and as a result, found that the hydroxy group-containing organic compound is contained as an optional component in a solvent in some cases, and found a relation between the amount of the hydroxy group-containing organic compound and the cycle characteristics. Further, the present inventors have considered that if the hydroxy group-containing compound is present in the compound (1), the hydroxy group-containing organic compound and the fluorinated lithium salt are reacted to generate hydrogen fluoride, thus leading to a decrease in the cycle characteristics. Therefore, they have reduced the amount of the hydroxy group-containing organic compound in the electrolyte solution using the compound (1) as a trial. As a result, they have accomplished the present invention to provide the present electrolyte solution which has high performance and which can prevent a decrease of the cycle characteristics.

The present electrolyte solution may contain a hydroxy group-containing compound as an optional component. That is, it is an electrolyte solution containing no hydroxy group-containing organic compound or having a content of a hydroxy group-containing organic compound of higher than 0 mg and at most 100 mg per 1 kg of the compound (1).

A hydroxy group-containing organic compound is a compound having carbon atoms and a hydroxy group bonded to the carbon atom. The hydroxy group-containing organic compound in the present invention is a compound soluble in the nonaqueous electrolyte solution.

The hydroxy group-containing organic compound may, for example, be methanol, ethanol, propanol, butanol, pentanol or a compound represented by the following formula (2). The compound (2) has a structure wherein one or both of the terminals of the compound (1) are hydroxy groups. 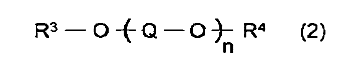 wherein n is an integer of from 1 to 10, Q is a C₁₋₄ linear alkylene group, or a group having at least one hydrogen atom in such a linear alkylene group substituted by a C₁₋₅ alkyl group or by a C₁₋₅ alkyl group having an etheric oxygen atom between carbon atoms, and when n is at least 2, the plurality of Q's may be the same group or different groups, and both R³ and R⁴ are hydrogen atoms, or either one of them is a hydrogen atom and the other is a C₁₋₁₀ alkyl group.

Particularly when the compound (1-A) is used as the compound (1), commercial products of the compound (1-A) include a compound represented by the following formula (2-A). 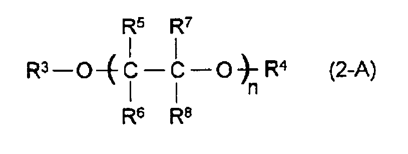 wherein n is an integer of from 1 to 10, each of R⁵ to R⁸ is independently a hydrogen atom, a C₁₋₅ alkyl group or a C₁₋₅ alkyl group having an etheric oxygen atom between carbon atoms, and when n is at least 2, the n number of R⁵ to R⁸ may be respectively the same group or different groups, and both R³ and R⁴ are hydrogen atoms, or either one of them is a hydrogen atom and the other is a C₁₋₁₀ alkyl group.

In the above formulae (2) and (2-A), Q and R⁵ to R⁸ are respectively as defined for Q and R⁵ to R⁸ in the above formulae (1) and (1-A), and preferred examples thereof are also as defined above. n and m are not necessarily the same.

In the compound (2) and the compound (2-A), at least one of R³ and R⁴ is a hydrogen atom. In a case where one is a hydrogen atom, the other group is a C₁₋₁₀ alkyl group.

A compound wherein both R³ and R⁴ are hydrogen atoms is a compound having two hydroxy groups. A compound wherein one of R³ and R⁴ is a hydrogen atom and the other is a C₁₋₁₀ alkyl group is a compound having one hydroxy group.

R⁵ to R⁸ in the compound (2-A) are preferably the same groups as R⁵ to R⁸ in the compound (1-A), and n is preferably the same number as m in the compound (1-A). Further, R³ or R⁴ as the alkyl group in the compound (2) or the compound (2-A) is preferably the same alkyl group as R¹ or R² in the compound (1) or the compound (1-A).

As the compound (2-A), preferred is a compound represented by the following formula (2-A1) wherein R⁵ to R⁸ are all hydrogen atoms.

R³-O-(CH₂CH₂O)ₙ-R⁴ (2-A1)

wherein n, R³ and R⁴ are as defined for n, R³ and R⁴ in the formula (2-A).

The compound (2) having one hydroxy group may, for example, be diethylene glycol monomethyl ether, triethylene glycol monomethyl ether, tetraethylene glycol monomethyl ether, pentaethylene glycol monomethyl ether, diethylene glycol monoethyl ether, triethylene glycol monoethyl ether, tetraethylene glycol monoethyl ether or pentaethylene glycol monoethyl ether. Further, as examples of the compound (2) having one hydroxy group other than the above, for example, compounds represented by the following formulae (wherein Et represents an ethyl group) may be mentioned.

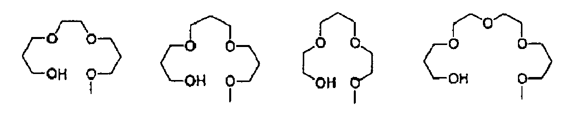

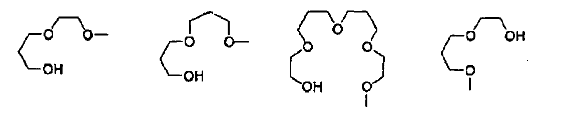

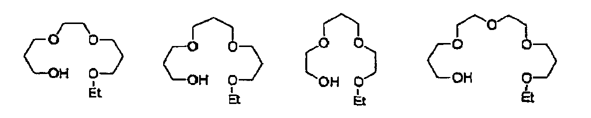

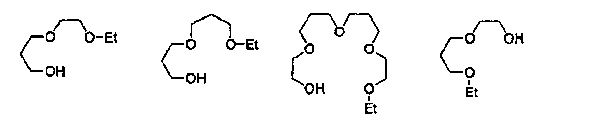

The compound (2) having two hydroxy groups may, for example, be diethylene glycol, triethylene glycol, tetraethylene glycol or pentaethylene glycol.

Further, as examples of the compound (2) other than the above, compounds represented by the following formulae may be mentioned.

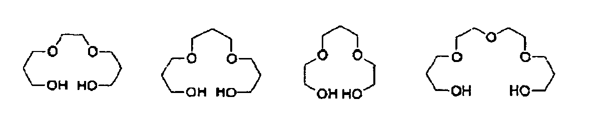

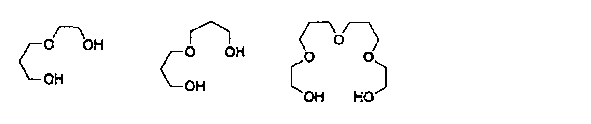

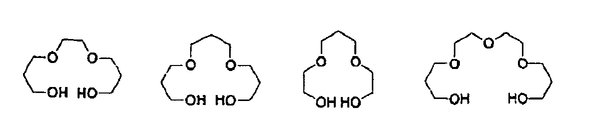

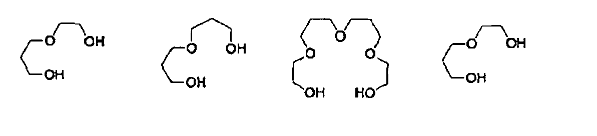

The hydroxy group-containing organic compound such as the compound (2) is contained, in a commercially available compound (1) for example, in an amount of from 500 to 1,000 mg/kg in the total amount of the solvent. Therefore, in a case where the present electrolyte solution is prepared by using the commercially available compound (1), it is preferred to use it after the hydroxy group-containing organic compound is removed.

The method of removing the hydroxy group-containing organic compound may, for example, be a distillation method (such as a multistage distillation method, or a method of simple distillation after treatment with an alkali), a column chromatography method or a solvent extraction method.

The content of the hydroxy group-containing organic compound contained in the compound (1) to be used for the present electrolyte solution is at most 100 mg, preferably at most 50 mg, more preferably at most 20 mg per 1 kg of the compound (1). When the content of the hydroxy group-containing organic compound is at most 100 mg per 1 kg of the compound (1), a secondary battery having excellent cycle characteristics is easily obtained. The lower limit of the content of the hydroxy group-containing organic compound in the present electrolyte solution is 0 mg, and it is 0 mg when the compound is not contained, and it is higher than 0 mg when it is contained, and is preferably at most 0.001 mg.

The lower limit of the content of the hydroxy group-containing organic compound per 1 kg of the compound (1) is 0 mg. 0 mg means that the compound is not contained or even if contained, it is contained in an amount of at most the detection limit by a conventional analysis means.

The hydroxy group-containing organic compound in the present invention can be determined quantitatively or qualitatively by means of a conventional analysis means. The analysis means is preferably gas chromatography (hereinafter referred to as "GC method"), NMR, IR or mass spectrometry (hereinafter referred to as "MS method").

For example, the hydroxy group-containing organic compound can be qualitatively determined by ¹H-NMR method or IR method. Further, the hydroxy group-containing organic compound can be quantitatively determined by GC method, and as the case requires, GC-MS method is preferably employed.

In the case of the GC method, as the analysis conditions, it is preferred to use a capillary column and to use a FID detector (hydrogen flame ionization detector) as a detector. The analysis conditions may suitably be changed depending on an object to be analyze. One example is shown below.

### Analysis conditions by GC method:

Apparatus: GC6890 (manufactured by Agilent Technologies, Inc.)
Capillary column: DB1301 (manufactured by J & W, column length: 60 m, inner diameter: 250 µm, thickness: 1 µm)
Inlet temperature: 240°C
Detector temperature: 250°C
Column temperature: held at 40°C for 10 minutes, heated to 240°C at 10°C/min and held at 240°C for 30 minutes.
Carrier gas: helium
Gas pressure: 25 psi
Gas flow rate: 1.4 mL/min
Split ratio: 60:1

A commercially available compound (1) contains a hydroxy group-containing organic compound in a large amount. Thus, a secondary battery using an electrolyte solution prepared by using the commercially available compound (1) without purification is insufficient in the practical performance since deterioration of the cell properties is remarkable due to hydrofluoric acid caused by the reaction of the hydroxy group-containing organic compound with the fluorinated lithium salt. However, by adjusting the content of the hydroxy group-containing organic compound in the present electrolyte solution to be at most 100 mg per 1 kg of the compound (1), a secondary battery using the present electrolyte solution shows practical charge and discharge properties. Particularly by adjusting the content of the hydroxy group-containing organic compound in the present electrolyte solution to be at most 50 mg per 1 kg of the compound (1), a secondary battery may have higher deterioration resistance.

### (Nonflammable solvent)

The present electrolyte solution preferably further contains a nonflammable solvent in addition to the fluorinated lithium salt and the compound (1), with a view to improving the nonflammability of the present electrolyte solution.

The nonflammable solvent is preferably a nonflammable fluorinated solvent, and especially a hydrofluoroether has good balance of the solubility of the fluorinated lithium salt, oxidation-reduction resistance and nonflammability as compared with other nonflammable solvents.

The hydrofluoroether in the present invention is a compound having an etheric oxygen atom inserted between carbon atoms in a saturated hydrocarbon and having some of hydrogen atoms bonded to carbon atoms substituted by fluorine atoms. The hydrofluoroether is a solvent which is present in the liquid form under conditions where the present electrolyte solution is used and which imparts nonflammability to the present electrolyte solution. The hydrofluoroether may be at least one member selected from the group consisting of a compound represented by the following formula (3) and a compound (4) represented by the following formula (4).

R⁹-O-R¹⁰ (3)

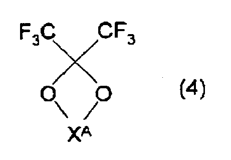

Each of R⁹ and R¹⁰ is independently a C₁₋₁₀ alkyl group, a C₁₋₁₀ fluorinated alkyl group, a C₁₋₁₀ alkyl group having an etheric oxygen atom between carbon atoms, or a C₁₋₁₀ fluorinated alkyl group having an etheric oxygen atom between carbon atoms, X^{A} is a C₁₋₅ alkylene group, a C₁₋₅ partially fluorinated alkylene group, a C₁₋₅ alkylene group having an etheric oxygen atom between carbon atoms, or a C₁₋₅ partially fluorinated alkylene group having an etheric oxygen atom between carbon atoms.

R⁹ and R¹⁰ may be the same or different. In this specification, a fluorinated alkyl group is a group having some or all of hydrogen atoms in an alkyl group substituted by fluorine atoms. A group having some of hydrogen atom substituted by fluorine atoms will be hereinafter referred to as a partially fluorinated alkyl group. In the partially fluorinated alkyl group, a hydrogen atom is present. Further, in the present invention, the structure of each of the alkyl group and the alkyl group having an etheric oxygen atom between carbon atoms, may, for example, be a linear structure, a branched structure, a cyclic structure or a group having a partially cyclic structure (such as a cycloalkyl alkyl group).

The compound (3) is preferably a compound (3-A) wherein each of R⁹ and R¹⁰ is a C₁₋₁₀ partially fluorinated alkyl group, or a compound (3-B) wherein R⁹ is a C₁₋₁₀ partially fluorinated alkyl group having an etheric oxygen atom between carbon atoms, and R¹⁰ is a C₁₋₁₀ partially fluorinated alkyl group or a C₁₋₁₀ partially fluorinated alkyl group having an etheric oxygen atom between carbon atoms.

With the compound (3), if the number of carbon atoms is too small, the boiling pint tends to be too low, and if it is too large, the viscosity tends to be high. Accordingly, the compound having a total number of carbon atoms being from 5 to 10 is preferred, and the compound having a total number of carbon atoms being from 5 to 8 is particularly preferred. The molecular weight of the compound (3) is preferably from 200 to 800, particularly preferably from 200 to 500. The number of etheric oxygen atoms in the compound (3) is influential over the flammability. Therefore, in the case of a compound (3) having etheric oxygen atoms, the number of etheric oxygen atoms is preferably from 1 to 4, particularly preferably 1 or 2. Further, as the fluorine contend in the compound (3) becomes high, the nonflammability will be improved, and the proportion of the molecular weight of fluorine atoms to the molecular weight of the compound (3) is preferably at least 50%, particularly preferably at least 60%.

Specific examples of the compound (3-A) may, for example, the following formulae (3-A1) to (3-A12).

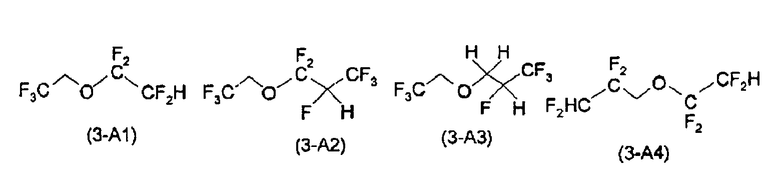

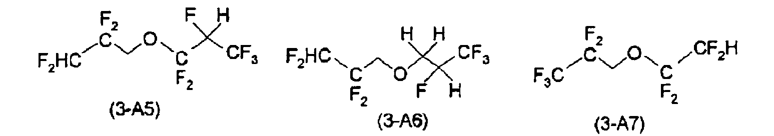

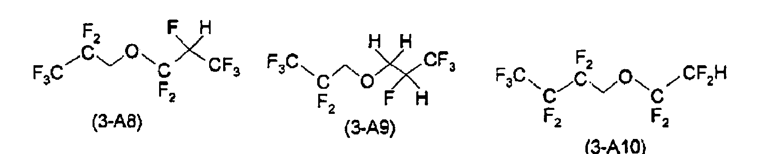

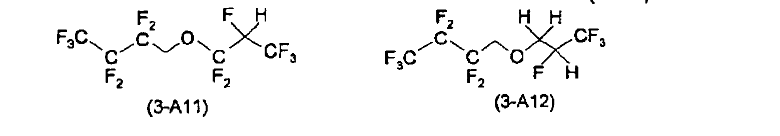

Specific examples of the compound (3-B) may, for example, be the following formulae (3-B1) to (2-B4).

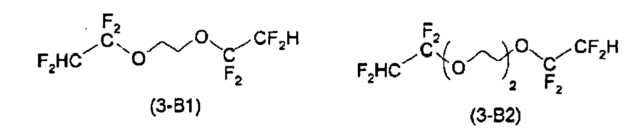

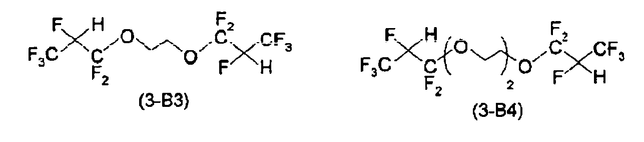

Since the fluorinated lithium salt can thereby be uniformly dissolved to easily obtain the present electrolyte solution having excellent nonflammability and a high conductivity, the compound (3) is preferably a compound (3-A) wherein each of R⁹ and R¹⁰ is a C₁₋₁₀ partially fluorinated alkyl group, more preferably CF₃CH₂OCF₂CF₂H (compound (3-A1)) (tradename: AE-3000, manufactured by Asahi Glass Co., Ltd.), CF₃CH₂OCF₂CHFCF₃ (compound (3-A2)), CF₃CH₂OCH₂CHFCF₃ (compound (3-A3)), CHF₂CF₂CH₂OCF₂CF₂H (compound (3-A4)), CHF₂CF₂CH₂OCH₂CHFCF₃ (compound (3-A6)), CF₃CF₂CH₂OCF₂CF₂H (compound (3-A7)), particularly preferably compound (3-A1) or compound (3-A7).

X^{A} In the compound (4) is preferable a C₁₋₅ alkylene group.

Since the fluorinated lithium salt can thereby be uniformly dissolved to easily obtain the present electrolyte solution having excellent nonflammability and a high conductivity, the compound (4) is preferably a hydrofluoroether wherein X^{A} is at least one member selected from the group consisting of CH₂, CH₂CH₂, CH(CH₃)CH₂ and CH₂CH₂CH₂.

Specific examples of the compound (4) may be the following compounds.

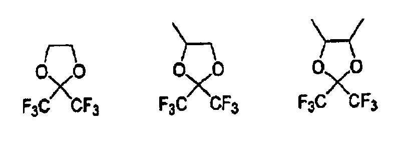

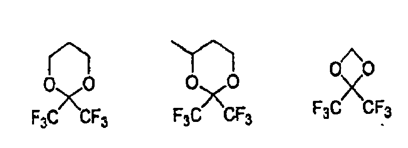

The content of the hydrofluoroether in the present electrolyte solution is preferably from 20 to 95 vol%, particularly preferably from 50 to 90 vol% based on the total volume of the present electrolyte solution.

### (Carbonate solvent)

The present electrolyte solution preferably contains a carbonate solvent in addition to the above-described fluorinated lithium salt and compound (1). The carbonate solvent is a compound having a carbonate bond, and is a compound which is present as a solvent under conditions where the present electrolyte solution is used.

The carbonate solvent is preferably at least one compound (hereinafter referred to as "compound (5)") selected from the group consisting of compound (5-1) and compounds (5-2) and (5-3) which are cyclic carbonates. It is more preferably compound (5-2).

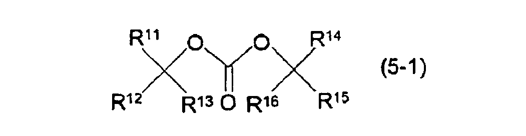

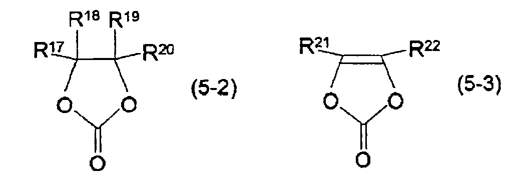

In the compound (5-1), each of R¹¹ to **R**¹⁶ is independently a hydrogen atom, a halogen atom, an alkyl group or a halogenated alkyl group.

The compound (5-1) is preferably at least one compound selected from the group consisting of dimethyl carbonate, diethyl carbonate, methylethyl carbonate, di-n-propyl carbonate, methyl-n-propyl carbonate, ethyl-n-propyl carbonate, methylisopropyl carbonate, ethyl-n-propyl carbonate, ethylisopropyl carbonate, di-n-propyl carbonate, diisopropyl carbonate and 3-fluoropropylmethyl carbonate, and from the viewpoint of availability and physical properties influential over the performance of the present electrolyte solution such as the viscosity, it is particularly preferably dimethyl carbonate, diethyl carbonate or methylethyl carbonate.

In the compound (5-2), each of R¹⁷ to R²⁰ is independently a hydrogen atom, a halogen atom, an alkyl group or a halogenated alkyl group.

The compound (5-2) is preferably at least one cyclic carbonate selected from the group consisting of propylene carbonate, ethylene carbonate, butylene carbonate, 4-chloro-1,3-dioxolan-2-one, 4-fluoro-1,3-dioxolan-2-one and 4-trifluoromethyl-1,3-dioxolan-2-one, and from the viewpoint of availability and the nature of present electrolyte solution, it is particularly preferably ethylene carbonate, propylene carbonate or fluoroethylene carbonate.

In the compound (5-3), each of **R**²¹ and R²² is independently a hydrogen atom, a halogen atom, an alkyl group or a halogenated alkyl group.

The compound (5-3) is preferably vinylene carbonate or dimethylvinylene carbonate, particularly preferably vinylene carbonate.

When the present electrolyte solution contains the compound (5), the solubility of the above fluorinated lithium salt in the hydrofluoroether will be improved.

Further, in a case where the present electrolyte solution containing the compound (5) is used for a lithium ion secondary battery, when charging is carried out by the secondary battery, the compound (5) will be decomposed on the surface of a negative electrode (such as a carbon electrode) to form a stable coating film. The coating film formed by the compound (5) is capable of reducing the resistance at the electrode interface, whereby an effect to accelerate intercalation of lithium ions to the negative electrode can be obtained. That is, the impedance at the negative electrode interface is made small by the coating film formed from the compound (5) in the present electrolyte solution, whereby intercalation of lithium ions to the negative electrode will be accelerated.

The content of the compound (5) in the present electrolyte solution is preferably at most 10 vol%, more preferably from 0.01 to 10 vol%, further preferably from 0.1 to 5.0 vol%, particularly preferably from 0.1 to 0.45 vol%, based on the total volume of the present electrolyte solution with a view to providing nonflammability over a long period of time, suppressing phase separation in the present electrolyte solution or generation of large amount of carbon dioxide gas and accomplishing both suppression of a decrease of the low temperature properties and improvement of the solubility of the fluorinated lithium salt.

As the dielectric constant becomes high, the compound (5) is more likely to undergo phase separation in the present electrolyte solution, and therefore, its amount should better be small. Further, if the compound (5) is too much, a large amount of carbon dioxide gas is likely to be formed by its decomposition, and it becomes difficult to maintain the nonflammability.

In a case where a linear carbonate of the compound (5-1) is used in combination with a cyclic carbonate of the compound (5-2) and/or the compound (5-3), the ratio (volume ratio of V₁:V₂) of the linear carbonate (volume: V₁) to the cyclic carbonate (volume: V₂) is preferably from 1:10 to 10:1.

### (Other solvents)

The present electrolyte solution may contain other solvents other than the hydrofluoroether, the compound (1) and the compound (5), within a range not to let the present electrolyte solution undergo phase separation.

Such other solvents may, for example, be a carboxylic acid ester such as an alkyl propionate, a dialkyl malonate or an alkyl acetate, a cyclic ester such as y-butyrolactone, a cyclic sulfonate such as 1,3-propanesultone or 1,4-butanesultone, an alkyl sulfonate and an alkyl phosphate.

The content of such other solvents is preferably at most 10 vol%, more preferably at most 5 vol%, per 100 vol% of the total volume in the present electrolyte solution.

Further, the present electrolyte solution may contain a nonflammable fluorinated solvent other than the hydrofluoroether, for the purpose of suppressing the vapor pressure of the present electrolyte solution or for the purpose of further improving the nonflammability of the present electrolyte solution, within a range where the fluorinated lithium salt is soluble in the present electrolyte solution. The fluorinated solvent may, for example, be a hydrochlorofluoroether, a hydrochlorofluoroalkane, a chlorofluoroalkane or a fluoroalkane. The fluorinated solvent is particularly preferably a fluoroalkane. The fluoroalkane is meant for such a compound that at least one of hydrogen atoms in an alkane is substituted by a fluorine atom and a hydrogen atom remains. In the present invention, a C₄₋₁₂ fluoroalkane is preferred. Among them, in a case where a fluoroalkane having at least 6 carbon atoms is employed, an effect to lower the vapor pressure of the present electrolyte solution can be expected, and if the number of carbon atoms is at most 12, a sufficient solubility of the fluorinated lithium salt can easily be maintained. Further, the fluorine content in the fluoroalkane (the fluorine content is meant for the proportion of the mass of fluorine atoms in the molecular weight) is preferably from 50 to 80%. When the fluorine content in the fluoroalkane is made to be at least 55%, the nonflammability will be higher, and when it is at most 80%, the solubility of the fluorinated lithium salt can be maintained.

As such a fluoroalkane, a compound having a linear structure is preferred, and for example, n-C₄F₉CH₂CH₃, n-C₆F₁₃CH₂CH₃, n-C₆F₁₃H or n-C₈F₁₇H may be mentioned. In a case where the solvent such as the fluoroalkane is used, its content is preferably at most 60 vol% per 100 vol% of the total amount of solvents used in the present electrolyte solution in order to maintain the solubility of the fluorinated lithium salt, and it is preferably at least 5 vol% to lower the vapor pressure or to further provide nonflammability.

Further, the present electrolyte solution may contain other components as the case requires, in order to improve the functions of the present electrolyte solution. Such other components may, for example, be a conventional overcharge-preventing agent, a dehydrating agent, a deoxidizing agent, and a property-improving additive to improve the cycle characteristics and the capacity-maintaining property after high temperature storage.

The overcharge-preventing agent may, for example, be an aromatic compound such as biphenyl, an alkylbiphenyl, terphenyl, partially hydrogenated terphenyl, cyclohexylbenzene, t-butylbenzene, t-amylbenzene, diphenyl ether or dibenzofuran; a partially fluorinated product of the above aromatic compound, such as 2-fluorobiphenyl, o-cyclohexylfluorobenzene or p-cyclohexylfluorobenzene; or a fluorinated anisole compound such as 2,4-difluoroanisole, 2,5-difluoroanisole or 2,6-difluoroanisole. Such overcharge-preventing agents may be used alone or in combination as a mixture of two or more of them.

In a case where the present electrolyte solution contains an overcharge-preventing agent, the content of the overcharge-preventing agent in the present electrolyte solution is preferably from 0.01 to 5 mass%. By incorporating at least 0.01 mass% of the overcharge-preventing agent in the present electrolyte solution, when the present electrolyte solution is used for a secondary battery, it becomes easier to prevent breakage or ignition of a secondary battery by overcharge, and it is possible to use the secondary battery using the present electrolyte solution more stably.

The dehydrating agent may, for example, be molecular sieves, sodium sulfate, magnesium sulfate, calcium hydride, potassium hydride, sodium hydride or lithium aluminum hydride. As the solvent to be used for the present electrolyte solution, it is preferred to use one subjected to dehydration by the above dehydrating agent, followed by rectification. Otherwise, a solvent subjected to dehydration by the above dehydrating agent without rectification may be used.

The property-improvement additive may, for example, be a carbonate compound other than the above carbonate solvent, such as phenylethylene carbonate, erythritan carbonate or spiro-bis-dimethylene carbonate; a carboxylic acid anhydride such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride or phenylsuccinic anhydride; a sulfur-containing compound such as ethylene sulfite, methyl methanesulfonate, busulfan, sulfolane, sulfolene, dimethylsulfone, diphenylsulfone, methylphenylsulfone, dibutyldisulfide, dicyclohexyldisulfide, tetramethylthiuram monosulfide, N,N-dimethylmethane sulfonamide or N,N-diethylmethane sulfonamide; a nitrogen-containing compound such as 1-methyl-2-pyrrolidinone, 1-methyl-2-piperidone, 3-methyl-2-oxazolidinone, 1,3-dimethyl-2-imidazotidinone or N-methylsuccinimide; a hydrocarbon solvent such as heptane, octane or cycloheptane; or a fluorinated aromatic compound such as fluorobenzene, difluorobenzene, hexafluorobenzene or benzotrifluoride. These property-improving additives may be used alone or in combination as a mixture of two or more of them.

In a case where the present electrolyte solution contains a property-improving additive, the content of the property-improving additive in the present electrolyte solution is preferably from 0.01 to 5 mass%.

Further, the present electrolyte solution preferably has a conductivity at 15°C of at least 0.25 S·m⁻¹ with a view to obtaining a practically sufficient conductivity. Further, the viscosity (20°C) measured by a rotary viscometer is preferably from 0.1 to 20 cP.

Further, the present electrolyte solution preferably has a flash point of at least 70°C by a Cleveland open cup flash point test (in accordance with JIS K2265), and particularly preferably shows no flash point. Such a flash point of the present electrolyte solution can be adjusted by adjusting the types or contents of the hydrofluoroether and the compound (1). For example, when the amount of the hydrofluoroether is at least 20 vol% based on the total amount of solvents, the electrolyte solution tends to show no flash point, and when m in the ether compound is at least 3, the electrolyte solution tends to have a flash point of at least 70°C. However, the types and contents may suitably be changed taking into consideration also other required properties as the electrolyte solution.

Further, the present electrolyte solution is preferably an electrolyte solution, of which the reduction potential where the decomposition current value reaches 0.05 mA/cm² is at most 0.2 V and the oxidation potential where the decomposition current value reaches 0.05 mA/cm² is at least 4.0 V. In the present invention, a potential range with the lower limit being the reduction potential where the decomposition current value reaches 0.05 mA/cm² and the upper limit being the oxidation potential where the decomposition current value reaches 0.05 mA/cm², is referred to as a potential window. The value of such a potential window is a value represented by a potential based on lithium metal. Such a potential window can be accomplished by adjusting the molar ratio (M_{G}:M_{Li}) of the above compound (1) (molar amount: M_{G}) to the fluorinated lithium salt (molar amount: M_{Li}) to be from 0.2:1 to 4:1. The measurement of the potential window can be carried out by the method which will be described in Examples. Further, in a case where each of R¹ and R² in the compound (1) is a methyl group, the molar ratio (M_{G}:M_{Li}) is preferably from 1: 2 to 3:1.

In the above-described present electrolyte solution, by adjusting the content of the hydroxy group-containing organic compound to be at most 100 mg per 1 kg of the compound (1), generation of hydrogen fluoride by the reaction of the hydroxy group-containing organic compound with the fluorinated lithium salt can be suppressed, whereby deterioration of the nonaqueous electrolyte solution which leads to a decrease in the cycle characteristics can be suppressed. Accordingly, by using the present electrolyte solution, a secondary battery excellent in the cycle characteristics can be obtained.

Further, excellent nonflammability of the present electrolyte solution can be obtained, since a hydrofluoroether such as the compound (3) or the compound (4) is used as the solvent for the present electrolyte solution. Further, in this case, the fluorinated lithium salt can be uniformly dissolved by the compound (1) even without using a carbonate solvent, whereby the obtainable present electrolyte solution exhibits a practically sufficient conductivity.

Further, since a large amount of a carbonate solvent is not required, there is no worry about formation of carbon dioxide gas, and the nonflammability can be maintained for a long period of time.

In a case where the present electrolyte solution contains other components other than the fluorinated lithium salt and the compound (1), it is preferred to remove the hydroxy group-containing organic compound also with respect to other components thereby to reduce the content of the hydroxy group-containing organic compound in the present electrolyte solution. A component which may contain the hydroxy group-containing organic compound other than the compound (1) may, for example, be a carbonate solvent such as the compound (5-1), (5-2) or (5-3). The carbonate solvent such as the compound (5-1), (5-2) or (5-3) may contain, as the hydroxy group-containing organic compound, an alcohol which is a decomposed product thereof. In this case, the alcohol in the carbonate such as the compound (5-1), (5-2) or (5-3) can be removed by a distillation purification method or column chromatography.

The present electrolyte solution can be used as an electrolyte solution for a chargeable device such as a lithium ion secondary battery, an electric double layer capacitor or a lithium ion capacitor. It is particularly suitably used as an electrolyte solution for a lithium ion secondary battery.

### [Secondary battery]

A secondary battery preferred as the chargeable device of the present invention (hereinafter referred to as the present secondary battery) is a secondary battery comprising a negative electrode, a positive electrode and the present electrolyte solution as an electrolyte solution for a lithium ion secondary battery.

The negative electrode may be an electrode containing a negative electrode active material capable of electrochemically charging or discharging lithium ions. As the negative electrode active material, a known negative electrode active material for lithium-ion secondary batteries may be used, and a carbon material such as artificial or natural graphite or amorphous carbon, a metal such as metal lithium or a lithium alloy, or a metal compound, capable of charging or discharging lithium ions may be mentioned. One of these negative electrode active materials may be used alone, or two or more of them may be used in combination.

Among them, a carbon material is particularly preferred as the negative electrode active material. Further, as the carbon material, graphite or a carbon material having the surface of graphite covered with carbon which is amorphous as compared with the graphite, is particularly preferred.

The graphite is preferably such that the value d (interlayer distance, hereinafter referred to simply as the value d) of the lattice plane (002 plane) obtained by the X-ray diffraction by the method of the Japan Society for Promotion of Scientific Research is from 0.335 to 0.338 nm, more preferably from 0.335 to 0.337 nm. Further, the crystallite size (Lc) obtained by the X-ray diffraction by the method of the Japan Society for Promotion of Scientific Research is preferably at least 30 nm, more preferably at least 50 nm, further preferably at least 100 nm. The ash content of the graphite is preferably at most 1 mass%, more preferably at most 0.5 mass%, further preferably at most 0.1 mass%.

Further, the carbon material having the surface of graphite covered with amorphous carbon is preferably such that graphite having a value d of from 0.335 to 0.338 nm is used as a nucleus, and the surface of the graphite is covered with amorphous carbon having a value d larger than the graphite, and the ratio of the graphite (mass: W_{A}) as the nucleus to the amorphous carbon (mass: W_{B}) covering the graphite is preferably from 80/20 to 99/1 by mass ratio (W_{A}/W_{B}). By using such a carbon material, it becomes easy to produce a negative electrode which has a high capacity and is hardly reactive with the nonaqueous electrolyte solution.

The particle size of the carbon material is preferably at least 1 µm, more preferably at least 3 µm, further preferably at least 5 µm, particularly preferably at least 7 µm, by a median diameter by a laser diffraction/scattering method. Further, the upper limit of the particle size of the carbon material is preferably 100 µm, more preferably 50 µm, further preferably 40 µm, particularly preferably 30 µm.

The specific surface area of the carbon material by BET method is preferably at least 0.3 M²/g, more preferably at least 0.5 m²/g, further preferably at least 0.7 m²/g, particularly preferably at least 0.8 m²/g. The upper limit of the specific surface area of the carbon material is preferably 25.0 m²/g, more preferably 20.0 m²/g, further preferably 15.0 m²/g, particularly preferably 10.0 m²/g.

The carbon material preferably has a value R (=I_{B}/I_{A}) of from 0.01 to 0.7, which is represented by a ratio of the peak intensity I_{B} of a peak P_{B} within a range of from 1,300 to 1,400 cm⁻¹ to the peak intensity I_{A} of a peak P_{A} within a range of from 1,570 to 1,620 cm⁻¹ when the carbon material is analyzed by the Raman spectrum using an argon ion laser beam. Further, the half value width of the peak P_{A} is preferably at most 26 cm⁻¹, particularly preferably at most 25 cm⁻¹.

The metal useful as a negative electrode active material other than metal lithium, may, for example, be Ag, Zn, Al, Ga, In, Si, Ti, Ge, Sn, Pb, P, Sb, Bi, Cu, Ni, Sr or Ba. Further, the lithium alloy may be an alloy of lithium with the above metal. Further, the metal compound may, for example, be an oxide of the above metal.

Among them, at least one metal selected from the group consisting of Si, Sn, Ge, Ti and Al, or a metal compound, a metal oxide or a lithium alloy containing such a metal, is preferred. At least one metal selected from the group consisting of Si, Sn and Al, or a metal compound or a lithium alloy containing such a metal or lithium titanate, is more preferred.

The metal capable of charging or discharging lithium ions, or the metal compound or the lithium alloy containing such a metal, usually has a large capacity per unit mass, as compared with the carbon material represented by graphite, and thus, it is suitable for a secondary battery which is required to have a higher energy density.

The positive electrode may be an electrode containing a positive electrode active material capable of electrochemically charging or discharging lithium ions.

As such a positive electrode active material, a known positive electrode active material for lithium ion secondary batteries may be used. For example, a lithium-containing transition metal oxide such as lithium cobalt oxide, lithium nickel oxide or lithium manganese oxide, a lithium-containing transition metal composite oxide using at least one transition metal, a transition metal oxide, a transition metal sulfide, a metal oxide or an olivine metal lithium salt may be mentioned.

As a transition metal for the lithium-containing transition metal composite oxide, V, Ti, Cr, Mn, Fe, Co, Ni or Cu is, for example, preferred. For example, a lithium cobalt composite oxide such as LiCoO₂ a lithium nickel composite oxide such as LiNiO₂, a lithium manganese composite oxide such as LiMnO₂, LiMn₂O₄ or LiMnO₃, or one having a part of the transition metal atom constituting such a lithium transition metal composite oxide substituted by another metal such as Al, Ti, V, Cr, Mn, Fe, Co, Li, Ni, Cu, Zn, Mg, Ga, Zr, Si or Yb, may, for example, be mentioned.

One having substituted by another metal may, for example, be LiMn_{0.5}Ni_{0.5}O₂, LiMn₁.₈Al_{0.2}O₄, LiNi_{0.85}CO_{0.10}AI_{0.05}O₂, Limn_{1.5}Ni_{0.5}O₄, LiNi_{1/3}Co_{1/3}Mn_{1/3}O₂ or Limn_{1.8}Al_{0.2}O₄.

The transition metal oxide may, for example, be TiO₂, MnO₂, MoO₃, V₂O₅ or V₆O₁₃, and the transition metal sulfide may, for example, be TiS₂, FeS or MoS₂. The metal oxide may, for example, be SnO₂ or SiO₂.

The olivine metal lithium salt is a compound represented by the formula Li_{L}XₓYyO_{z}F_{g} (wherein X is Fe(II), Co(II), Mn(II), Ni(II), V(II) or Cu(II), Y is P or S, 0≦L≦3, 1≦x≦2, 1≦y≦3, 4≦z≦12, 0≦g≦1) or a composite thereof. For example, LiFePO₄, Li₃Fe₂(PO₄)₃, LiFeP₂O₇, LiMnPO₄, LiNiPO₄, LiCoPO₄, Li₂FePO₄F, Li₂MnPO₄F, Li₂NiPO₄ Li₂C_{O}PO₄F, Li₂FeSiO₄ Li₂MnSiO₄, Li₂NiSiO₄ or Li₂C_{O}SiO₄ may be mentioned.

These positive electrode active materials may be used alone or in combination as a mixture of two or more of them.

Further, it is possible to employ one having a substance with a composition different from the substance constituting the main body positive electrode active material, deposited on the surface of such a positive electrode active material. The substance to be deposited on the surface may, for example, be an oxide such as aluminum oxide, silicon oxide, titanium oxide, zirconium oxide, magnesium oxide, calcium oxide, boron oxide, antimony oxide or bismuth oxide; a sulfate such as lithium sulfate, sodium sulfate, potassium sulfate, magnesium sulfate, calcium sulfate or aluminum sulfate; or a carbonate such as lithium carbonate, calcium carbonate or magnesium carbonate.

With respect to the amount of the substance deposited on the surface, the lower limit of the mass to the positive electrode active material is preferably 0.1 ppm, more preferably 1 ppm, further preferably 10 ppm. The upper limit is preferably 20%, more preferably 10%, further preferably 5%. By the substance deposited on the surface, it is possible to prevent an oxidation reaction of the present electrolyte solution at the surface of the positive electrode active material, whereby it is possible to improve the useful life of the battery.

The positive electrode active material is preferably a lithium-containing metal oxide having an α-NaCrO₂ structure as a matrix, such as LiCoO₂ LiNiO₂ or LiMnO₂, or a lithium-containing metal oxide having a spinel type structure as a matrix, such as LiMn₂O₄, from such a viewpoint that the discharge voltage is high, and the electrochemical stability is high.

The present secondary battery has a negative electrode and a positive electrode, and the present electrolyte solution, wherein either one or each of the negative electrode and the positive electrode is a polarizing electrode. The polarizing electrode is preferably one composed mainly of an electrochemically inactive material having a high specific surface area, and it is particularly preferably one made of activated carbon, carbon black, fine particles of a metal or fine particles of a conductive oxide. Among them, preferred is one having an electrode layer made of a carbon material powder having a high specific surface area such as activated carbon formed on the surface of a metal current collector.

For the preparation for an electrode, a binder to bind the negative electrode active material or the positive electrode active material is used.

Such a binder to bind the negative electrode active material and the positive electrode active material may be selected from materials stable against the electrolyte solution and the solvent to be used at the time of producing the electrodes. The binder may, for example, be a fluororesin such as polyvinylidene fluoride or polytetrafluoroethylene, a polyolefin such as polyethylene or polypropylene, a polymer or copolymer having unsaturated bonds such as a styrene/butadiene rubber, isoprene rubber or butadiene rubber, or an acrylic acid type polymer or copolymer such as an acrylic acid copolymer or a methacrylic acid copolymer. One of these binders may be used alone, or two or more of them may be used in combination.

In order to increase the mechanical strength and electrical conductivity, a thickener, an electrically conductive material, a filler or the like may be incorporated in the electrode.

The thickener may, for example, be carboxymethylcellulose, methylcellulose, hydroxymethylcellulose, ethylcellulose, polyvinyl alcohol, oxidized starch, phosphorylated starch, casein or polyvinyl pyrolidone. One of these thickeners may be used alone, or two or more of them may be used in combination.

The electrically conductive material may, for example, be a metal material such as copper or nickel, or a carbon material such as graphite or carbon black. One of these electrically conductive materials may be used alone, or two or more of them may be used in combination.

An electrode can be prepared by adding a binder, a thickener, an electrically conductive material, a solvent, etc. to a negative electrode active material or a positive electrode active material, to form a slurry, which is then applied to a current collector, followed by drying. In such a case, the electrode is preferably pressed and densified by pressing after the drying.

If the density of the positive electrode active material layer is too low, the capacity of the present secondary battery is likely to be inadequate.

As the current collector, various type of current collector may be used. However, usually a metal or an alloy is employed. As a current collector for a negative electrode, copper, nickel, stainless steel or the like may be mentioned, and copper is preferred. Whereas, as a current collector for a positive electrode, a metal such as aluminum, titanium or tantalum, or its alloy may be mentioned, and aluminum or its alloy is preferred, and aluminum is particularly preferred.

The shape of the present secondary battery may be selected depending upon the particular application, and it may be a coin-form, a cylindrical form, an angular form or a laminate form. Likewise, the shapes of the positive electrode and the negative electrode may also be suitably selected to meet with the shape of the present secondary battery.

The charging voltage for the present secondary battery is preferably at least 3.4 V, more preferably at least 4.0 V, particularly preferably at least 4.2 V. In a case where the positive electrode active material for the present secondary battery is a lithium-containing transition metal oxide, a lithium-containing transition metal composite oxide, a transition metal oxide, a transition metal sulfide or a metal oxide, the charging voltage is preferably at least 4.0 V, particularly preferably at least 4.2 V. On the other hand, in a case where the positive electrode active material is an olivine metal lithium salt, the charging voltage is preferably at least 3.2 V, more preferably at least 3.4 V. The present electrolyte solution has oxidation resistance at 4.5 V or higher and reduction resistance at 0.2 V or lower, and accordingly, the present electrolyte solution can be used for optional electrodes having operating potentials within such a range.

Further, the present secondary battery is preferably a secondary battery to be used at a charging voltage of at least 4.0 V (the potential based on lithium metal). For example, it may be the present secondary battery having the present electrolyte solution which has a potential window in a range of from 0 V to 4.2 V.

Between the positive electrode and the negative electrode of the present secondary battery, a porous film is usually interposed as a separator in order to prevent short circuiting. In such a case, the present electrolyte solution is used as impregnated to the porous film. The material and shape of the porous film may be selected from ones which are stable against the present electrolyte solution and excellent in the liquid-maintaining property. A porous sheet or non-woven fabric made of a fluororesin such as polyvinylidene fluoride, polytetrafluoroethylene or a copolymer of ethylene and tetrafluoroethylene, or a polyolefin such as polyethylene or polypropylene, is preferred, and the material is preferably a polyolefin such as polyethylene or polypropylene. Further, a gelled one having the present electrolyte solution impregnated to such a porous film, may be used as a gel electrolyte.

The material for a battery exterior package to be used for the present electrolyte solution may be nickel-plated iron, stainless steel, aluminum or its alloy, nickel, titanium, a resin material or a film material.

The present secondary battery, which uses the present electrolyte solution, is free from ignition even if an excessive burden is caused to the secondary battery by e.g. overheat, overcharge, internal short-circuit or external short-circuit, and thus is excellent in nonflammability. Accordingly, it is unnecessary to provide a complex monitoring system to monitor such an excessive burden, in the secondary battery.

Thus, the present secondary battery may be used for various applications, such as cell phones, portable game machines, digital cameras, digital video cameras, electric tools, notebook computers, handheld terminals, portable music players, electric cars, hybrid cars, electric trains, airplanes, satellites, submarines, ships, permanent power supply devices, robots and power storage systems. Further, the secondary battery of the present invention is excellent particularly in safety and thus has particularly preferable characteristics as a large size secondary battery for e.g. electric cars, hybrid cars, electric trains, airplanes, satellites, submarines, ships, permanent power supply devices, robots and power storage systems.

The above-described present secondary battery has excellent cycle characteristics, long-term nonflammability and a practically sufficient conductivity, since the present electrolyte solution is used as the electrolyte solution for a lithium ion secondary battery, whereby deterioration of the present electrolyte solution due to a reaction of the hydroxy group-containing organic compound with the fluorinated lithium salt in the present electrolyte solution is suppressed.

### EXAMPLES

Now, the present invention will be described in detail with reference to Examples and Comparative Examples. However, it should be understood that the present invention is by no means thereby restricted.

In Examples, the hydroxy group-containing organic compound was analyzed by GC method under the following conditions.

### [Analysis conditions by GC method]

As a gas chromatograph, GC6890 manufactured by Agilent Technologies, Inc. provided with a split inlet and a FID detector, having a capillary column DB1301 (column length: 60 m, inner diameter: 250 µm, thickness: 1 µm) manufactured by J & W installed, was used. The inlet temperature was held at 240°C and the detector temperature at 250°C. Such a heating pattern was employed that the column temperature was held at 40°C for 10 minutes, raised to 240°C at a heating rate of 10°C per minute and then held for 30 minutes. A sample was injected at a split ratio of 60:1 with an injection amount of 0.2 µL to a column through which helium was made to flow under a gas pressure of 25 psi at a gas flow rate of 1.4 mL/min to carry out analysis.

### [Analysis conditions by GC-MS method]

As the GC-MS apparatus, GCMS-QP5050A manufactured by Shimadzu Corporation having the same column as for the above gas chromatograph installed was used. Analysis was carried out at an interface temperature of 250°C, and with the inlet temperature, the column heating pattern, the gas grow rate, the gas pressure, the split ratio and the injection amount being the same as for the above GC method. As the ionization method, El method (electron ionization method) was employed.

The hydroxy group-containing organic compound amount in an object to be analyzed was described as a value represented by the peak area percentage in the chromatogram. Further, compounds were identified by comparing the fragment pattern of GC-MS with that of a standard product.

### PRODUCTION EXAMPLE 1

Diethylene glycol dimethyl ether (manufactured by TOKYO CHEMICAL INDUSTRY CO., LTD.) containing 980 mg of diethylene glycol monomethyl ether as a hydroxy group-containing organic compound per 1 kg of diethylene glycol dimethyl ether was purified by a ten-stage multistage distillation until the content of the hydroxy group-containing organic compound was the detection unit (detection limit: 10 mg/kg) by GC method or below.

Diethylene glycol dimethyl ether (1.78 g, 13.3 mmol) after purification and LiPF₆ (1.51 g, 10.0 mmol) as the fluorinated lithium salt were mixed, and to the obtained mixture, HFE347 (CF₃CH₂OCF₂CF₂H, 10 mL) was added and mixed to prepare a nonaqueous electrolyte solution 1. Further, by ¹H-NMR, the nonaqueous electrolyte solution 1 was confirmed not to contain the hydroxy group-containing organic compound.

### PRODUCTION EXAMPLE 2

To the nonaqueous electrolyte solution 1 in Production Example 1, diethylene glycol monomethyl ether was added in an amount of 50 mg per 1 kg of diethylene glycol dimethyl ether to prepare a nonaqueous electrolyte solution 2. By ¹H-NMR, the nonaqueous electrolyte solution 2 was confirmed not to contain a hydroxy group-containing organic compound other than diethylene glycol monomethyl ether.

### PRODUCTION EXAMPLE 3

To the nonaqueous electrolyte solution 1 in Production Example 1, diethylene glycol monomethyl ether was added in an amount of 100 mg per 1 kg of diethylene glycol dimethyl ether to prepare a nonaqueous electrolyte solution 2. By ¹H-NMR, the nonaqueous electrolyte solution 3 was confirmed not to contain the hydroxy group-containing organic compound other than diethylene glycol monomethyl ether.

### PRODUCTION EXAMPLE 4: General Purpose Electrolyte Solution

LiPF₆ was dissolved in a ratio of 1.0 mol/L in a mixture of ethylene carbonate with ethylmethyl carbonate (volume ratio 1:1) to prepare a nonaqueous electrolyte solution 4. By ¹H-NMR, the nonaqueous electrolyte solution 4 was confirmed not to contain a hydroxy group-containing organic compound.

### <Evaluation of monopolar cell sheet-form nonaqueous electrolyte solution secondary battery comprising LiCoO₂ positive electrode/lithium metal foil>

### EXAMPLE 1

90 parts by mass of LiCoO₂ (tradename: "Selion C" manufactured by AGC Seimi Chemical Co., Ltd.), 5 parts by mass of carbon black (tradename: "DENKABLACK", manufactured by Denki Kagaku Kogyo Kabushiki Kaisha) and 5 parts by mass of polyvinylidene fluoride were mixed, and N-methyl-2-pyrolidone was added to obtain a slurry. The slurry was applied uniformly on each side of a 20 µm aluminum foil, followed by drying and then by pressing so that the density of the positive electrode active material layer would be 3.0 g/cm³, thereby to obtain a positive electrode.

Then, the LiCoO₂ positive electrode, a lithium metal foil having the same area as the LiCoO₂ positive electrode, and a separator made of polyethylene, were laminated in the order of the lithium metal foil, the separator and the LiCoO₂ positive electrode to prepare a battery element. Then, the battery element was accommodated in a bag made of a laminate film having each side of aluminum (thickness: 40 µm) covered with a resin layer (polyethylene resin) so that terminals of the LiCoO₂ positive electrode and the negative electrode (lithium metal foil) of the battery element were exposed to the outside of the bag. Then, the nonaqueous electrolyte solution prepared in Production Example 1 was injected into the bag, followed by vacuum sealing to prepare a sheet-form nonaqueous electrolyte solution secondary battery 1 (secondary battery1).

### EXAMPLE 2

A sheet-form nonaqueous electrolyte solution secondary battery 2 (secondary battery 2) was prepared in the same manner as in Example 1 except that the nonaqueous electrolyte solution 2 prepared in Production Example 2 was used.

### EXAMPLE 3

A sheet-form nonaqueous electrolyte solution secondary battery 3 (secondary battery 3) was prepared in the same manner as in Example 1 except that the nonaqueous electrolyte solution 3 prepared in Production Example 3 was used.

### COMPARATIVE EXAMPLE 1

A sheet-form nonaqueous electrolyte solution secondary battery 4 (secondary battery 4) was prepared in the same manner as in Example 1 except that a nonaqueous electrolyte solution prepared by using diethylene glycol dimethyl ether (manufactured by TOKYO CHEMICAL INDUSTRY CO., LTD., containing 980 mg of diethylene glycol monomethyl ether as a hydroxy group-containing organic compound per 1 kg of diethylene glycol dimethyl ether) without purification instead of diethylene glycol dimethyl ether after purification used in Production Example 1, was used.

### REFERENCE EXAMPLE 1

A sheet-form nonaqueous electrolyte solution secondary battery 5 (secondary battery 5) was prepared in the same manner as in Example 1 except that the nonaqueous electrolyte solution 4 prepared in Production Example 4 was used.

### [Evaluation method]

Evaluation of the cycle characteristics of the secondary batteries 1 to 5 in Examples, Comparative Example and Reference Example was carried out by the following method.

With a monopolar cell sheet-form nonaqueous electrolyte solution secondary battery comprising LiCoO₂ positive electrode/lithium metal foil in a state sandwiched by glass plates in order to increase adhesion between electrodes, a cycle of charging it to 4.2 V with a constant current corresponding to 0.1 C and discharging it to 3 V with a constant current corresponding to 0.1 C, was carried out at 25°C for 2 cycles. Further, a cycle of charging it to 4.2 V with a constant current corresponding to 0.25 C and discharging it to 3 V with a constant current corresponding to 0.25 C, was carried out for 2 cycles to stabilize the secondary battery. In the 5th and subsequent cycles, a cycle of charging it to 4.2 V with a constant current of 0.5 C and further charging it with a constant voltage of 4.2 V until the current value became 0.05 C and then discharging it to 3 V with a constant current of 0.5 C, was repeated, whereupon a retention rate of the discharged capacity in the 80th cycle to the discharged capacity in the first cycle was taken as the evaluation result. Here, 1 C represents a current value to discharge the standard capacity of a battery in one hour, and 0.2 C represents a current value of 1/5 thereof.

In Table 1, the results of evaluation of the cycle characteristics in Examples, Comparative Example and Reference Example are shown.

**TABLE 1**

| | Discharged capacity retention rate (%) |
|---|---|
| Example 1 | 85 |
| Example 2 | 79 |
| Example 3 | 75 |
| Comp. Example 1 | 50 |
| Ref. Example 1 | 88 |

As shown in Table 1, the secondary battery 1 in Example 1 in which the hydroxy group-containing organic compound was removed to the level of the detection limit of the gas chromatography or below, had excellent cycle characteristics under a condition of a charging voltage of 4.2 V, as compared with the secondary battery 4 in Comparative Example 1 in which the nonaqueous electrolyte solution prepared by using diethylene glycol dimethyl ether without purification was used. The secondary battery 5 in Reference Example 1 in which no compound (1) was used corresponds to an example of a conventional secondary battery, and it showed cycle characteristics substantially equal to those of the secondary battery.

Further, the secondary battery 2 in Example 2 in which the nonaqueous electrolyte solution 2 prepared by adding diethylene glycol monomethyl ether so that the content of the hydroxy group-containing organic compound was 50 mg per 1 kg of diethylene glycol dimethyl ether was used, and the secondary battery 3 in Example 3 in which the nonaqueous electrolyte solution 3 prepared by adding diethylene glycol monomethyl ether so that the content of the hydroxy group-containing organic compound was 100 mg per 1 kg of diethylene glycol dimethyl ether was used, had excellent cycle characteristics as compared with the secondary battery 4 in Comparative Example 1 under a condition of a charging voltage of 4.2 V.

### INDUSTRIAL APPLICABILITY

The electrolyte solution for a chargeable device, an electrolyte solution for a lithium ion secondary battery and a secondary battery using the electrolyte solution of the present invention, are excellent in the cycle characteristics. Further, long-term nonflammability and a practically sufficient conductivity can be achieved with them. The electrolyte solution for a chargeable device of the present invention is useful for secondary batteries in various applications such as cell phone, notebook computers, electric cars etc. and for chargeable devices such as electric double layer capacitors and lithium ion capacitors.

The entire disclosure of Japanese Patent Application No. 2009-155562 filed on June 30, 2009 including specification, claims and summary is incorporated herein by reference in its entirety.

## Claims

1. An electrolyte solution for a chargeable device, which comprises a fluorinated lithium salt and a solvent comprising a compound represented by the following formula (1) and as an optional component, a hydroxy group-containing organic compound, wherein the amount of the hydroxy group-containing organic compound is at most 100 mg per 1 kg of the compound represented by the formula (1): 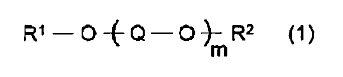 wherein m is an integer of from 1 to 10, Q is a C₁₋₄ linear alkylene group, or a group having at least one hydrogen atom of such a linear alkylene group substituted by a C₁₋₅ alkyl group or by a C₁₋₅ alkyl group having an etheric oxygen atom between carbon atoms, and when m is at least 2, the plurality of Q's may be the same group or different groups, and each of R¹ and R² is independently a C₁₋₁₀ alkyl group.

2. The electrolyte solution for a chargeable device according to Claim 1, wherein the fluorinated lithium salt is at least one member selected from the group consisting of LiPF₆, LIBF₄ and FSO₂N(Li)SO₂F.

3. The electrolyte solution for a chargeable device according to Claim 1 or 2, wherein the solvent comprising a compound represented by the formula (1) is a solvent comprising a compound represented by the following formula (1-A): 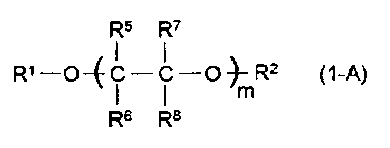 wherein m is an integer of from 1 to 10, each of R⁵ to R⁸ is independently a hydrogen atom, a C₁₋₅ alkyl group or a C₁₋₅ alkyl group having an etheric oxygen atom between carbon atoms, and when m is at least 2, the m number of R⁵ to R⁸ may be respectively the same group or different groups, and each of R¹ and R² is independently a C₁₋₁₀ alkyl group.

4. The electrolyte solution for a chargeable device according to Claim 1 or 2, wherein the solvent comprising a compound represented by the formula (1) is at least one member selected from the group consisting of diethylene glycol dimethyl ether, triethylene glycol dimethyl ether, tetraethylene glycol dimethyl ether, pentaethylene glycol dimethyl ether, diethylene glycol diethyl ether, triethylene glycol diethyl ether, tetraethylene glycol diethyl ether and pentaethylene glycol diethyl ether.

5. The electrolyte solution for a chargeable device according to any one of Claims 1 to 4, wherein the hydroxy group-containing organic compound is a compound represented by the following formula (2): 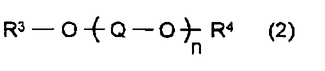 wherein n is an integer of from 1 to 10, Q is a C₁₋₄ linear alkylene group, or a group having at least one hydrogen atom of such a linear alkylene group substituted by a C₁₋₅ alkyl group or by a C₁₋₅ alkyl group having an etheric oxygen atom between carbon atoms, and when n is at least 2, the plurality of Q's may be the same group or different groups, and both R³ and R⁴ are hydrogen atoms, or either one of them is a hydrogen atom and the other is a C₁₋₁₀ alkyl group.

6. The electrolyte solution for a chargeable device according to any one of Claims 1 to 4, wherein the hydroxy group-containing organic compound is a compound represented by the following formula (2-A): 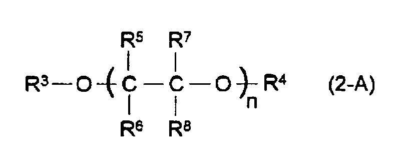 wherein n is an integer of from 1 to 10, each of R⁵ to R⁸ is independently a hydrogen atom, a C₁₋₅ alkyl group or a C₁₋₅ alkyl group having an etheric oxygen atom between carbon atoms, and when n is at least 2, the n number of R⁵ to R⁸ may be respectively the same group or different groups, and both R³ and R⁴ are hydrogen atoms, or either one of them is a hydrogen atom and the other is a C₁₋₁₀ alkyl group.

7. The electrolyte solution for a chargeable device according to any one of Claims 1 to 6, which further contains a nonflammable solvent.

8. The electrolyte solution for a chargeable device according to Claim 7, wherein the nonflammable solvent is a hydrofluoroether.

9. The electrolyte solution for a chargeable device according to Claim 8, wherein the hydrofluoroether is at least one compound selected from the group consisting of CF₃ CH₂ OCF₂ CF₂ H, CHF₂ CF₂ CH₂ OCF₂ CF₂ H and CF₃ CH₂ OCF₂ CHFCF₃ .

10. The electrolyte solution for a chargeable device according to any one of Claims 1 to 9, wherein the content of the compound represented by the formula (1) is from 0.2 to 4.0 times by mol to the total amount of the fluorinated lithium salt.

11. An electrolyte solution for a lithium ion secondary battery, comprising the electrolyte solution for a chargeable device as defined in any one of Claims 1 to 10.

12. A secondary battery comprising a negative electrode made of a material capable of electrochemically charging or discharging lithium ions, or metal lithium or a lithium alloy, a positive electrode made of a material capable of electrochemically charging or discharging lithium ions, and the electrolyte solution for a lithium ion secondary battery as defined in Claim 11.

13. The secondary battery according to Claim 12, which is used at a charging voltage being at least 3.4 V (as a potential based on lithium metal).
